# FASCICULE DE BREVET EUROPEEN

(11) **EP 1 992 518 B1**
(45) Date de publication et mention de la délivrance du brevet: **07.04.2010**
(21) Numéro de dépôt: 08300203.0
(22) Date de dépôt: 14.05.2008
(51) Int. Cl.: B60N 2/06, B60N 2/30

(54) **Ensemble de siège pour vehicule automobile**
Sitzaufbau für ein Kraftfahrzeug
Seat assembly for an automomotive vehicle

(30) Priorité: 16.05.2007 FR 0703520
(43) Date de publication de la demande: 19.11.2008
(73) Titulaire: Renault S.A.S., 92100 Boulogne-Billancourt (FR)
(72) Inventeur: Mercier, Cédric, 91830, LE COUDRAY MONTCEAUX (FR); Larsonneur, Jean-François, 78100, SAINT GERMAIN EN LAYE (FR)

(56) Documents cités:
- FR-A- 2 878 790
- FR-A- 2 884 186

## Description

L'invention concerne de façon générale un ensemble de siège pour véhicule automobile, dont la conception permet au siège de cet ensemble d'être déplacé selon les directions longitudinale et transversale du véhicule automobile.

La demande de brevet FR 2 878 790 déposée par la demanderesse, décrit un ensemble de siège mobile selon une direction transversale, et qui accroît la mobilité d'un siège arrière dans la direction longitudinale. Un tel ensemble de siège est typiquement installé dans une deuxième rangée de siège et facilite l'accès à une troisième rangée de siège par l'ouvrant desservant également la deuxième rangée de siège.

La mobilité vers l'avant d'un tel ensemble de siège est encore limitée. Ainsi, l'espace dégagé pour qu'un utilisateur puisse accéder à la troisième rangée de siège est encore trop réduit pour permettre un accès confortable, ou oblige à modifier la conception des ouvrants. On connait encore du document FR 2 884 186 (correspondant au préambule de la revendication independante) un ensemble de siège pour véhicule automobile pouvant être déplacé selon une direction longitudinale parallèle à l'axe longitudinal du véhicule et selon une direction transversale perpendiculaire à l'axe longitudinal.

L'invention vise à accroître encore l'espace dégagé- par un tel ensemble de siège lorsqu'il est avancé, sans réduire sa résistance mécanique, ni réduire ses axes de mobilité. L'invention porte ainsi sur un ensemble de siège pour véhicule automobile, lequel ensemble comprend : une première structure de support de siège, laquelle présente : des flancs latéraux aptes à être montés coulissants dans des rails longitudinaux et des premier et deuxième arbres transversaux joignant les deux flancs latéraux, disposés respectivement à l'avant et à l'arrière des flancs latéraux ; l'ensemble de siège comprenant une deuxième structure de support de siège, montée coulissante transversalement par rapport à la première structure et une assise de siège. L'assise de siège comprend elle : un châssis d'assise ; un mécanisme solidarisant sélectivement le châssis à la deuxième structure de support de siège ; un premier organe de liaison, solidaire d'une partie arrière du châssis d'assise, guidant le châssis d'assise en translation le long de l'axe du premier arbre transversal, et en rotation autour de l'axe du premier arbre transversal lorsque le mécanisme désolidarise le châssis et la deuxième structure de siège ; et un deuxième organe de liaison, solidaire d'une partie avant du châssis d'assise, caractérisé en ce que ledit deuxième organe de liaison est adapté à guider le châssis d'assise en translation le long de l'axe du deuxième arbre transversal lorsque le mécanisme solidarise le châssis à la deuxième structure de siège, ledit deuxième organe de liaison étant apte à être sélectivement désolidarisé du deuxième arbre transversal.

Les caractéristiques complémentaires de l'invention décrites ci-après font l'objet des revendications dépendantes.

Selon un mode de mise en oeuvre de l'invention particulièrement avantageux, le châssis comprend une barre transversale au niveau de sa partie avant, dans lequel le deuxième organe de liaison comprend une biellette dont une extrémité est montée à rotation sur cette barre transversale et dont une deuxième extrémité comprend des moyens pour guider la biellette en translation selon l'axe du deuxième arbre transversal et pouvant être sélectivement désaccouplés du deuxième arbre transversal.

En outre, l'ensemble de siège selon l'invention comprend avantageusement un dispositif de rappel sollicitant la biellette vers une position repliée sensiblement parallèle à l'assise lorsque les moyens de guidage sont désaccouples du deuxième arbre transversal.

De manière préférée, la deuxième structure de support de siège est montée coulissante transversalement par rapport à la première structure par l'intermédiaire d'au moins deux bras latéraux de support télescopiques dont les extrémités inférieure et supérieure sont montées pivotantes par rapport respectivement à la première et à la deuxième structures.

Selon un mode de réalisation particulièrement avantageux, l'ensemble de siège selon l'invention comprend un dossier s'étendant sensiblement verticalement, dans lequel l'assise est mobile entre une position rabattue contre le dossier et une position sensiblement horizontale lorsque le mécanisme de solidarisation désolidarise le châssis de siège et la deuxième structure de support de siège.

De plus, le premier organe de liaison comprend avantageusement, une première partie montée à rotation sur le châssis d'assise, une deuxième partie montée à rotation et coulissante sur le premier arbre transversal, une des deux parties présentant une piste de guidage, l'autre des deux parties présentant un arbre monté coulissant dans ladite piste.

En outre, la première structure de siège comprend, préférentiellement, dans sa partie supérieure deux rails transversaux, la deuxième structure de support de siège comprenant deux profilés transversaux montés coulissants respectivement dans les deux rails transversaux.

Selon une variante d'exécution préférée de l'invention, l'ensemble de sièges comprend en outre : un troisième arbre transversal joignant les deux flancs latéraux ; un troisième organe de liaison, solidaire d'une partie intermédiaire du châssis d'assise, guidant le châssis d'assise en translation le long de l'axe du troisième arbre transversal, et guidant le châssis d'assise en rotation autour de l'axe du troisième arbre transversal lorsque le mécanisme désolidarise le châssis et la deuxième structure de siège, ledit troisième organe de liaison étant apte à être sélectivement désolidarisé du troisième arbre transversal, et dans lequel lesdits arbres transversaux et lesdits organes de liaison sont configurés de sorte qu'une rotation du châssis d'assise l'amenant à avancer conduit à la désolidarisation entre le deuxième organe de liaison et le deuxième arbre transversal. Selon cette variante d'exécution, la première structure de siège comprend avantageusement, dans sa partie supérieure un rail transversal, la deuxième structure de support de siège comprenant un profilé transversal monté coulissant dans ledit rail transversal.

D'autres caractéristiques et avantages de l'invention ressortiront clairement de la description qui en est faite ci-après, à titre indicatif et nullement limitatif, en référence aux dessins annexés, dans lesquels :
- la figure 1 illustre en perspective un ensemble de siège selon un premier mode de de l'invention ;
- la figure 2 illustre de une partie de l'ensemble de de la figure 1 ;
- les figures 3 et 4 illustrent en perspective l'ensemble de siège de la figure 1 avec une assise rabattue ;
- les figures 5 et 6 illustrent en perspective un mécanisme d'un deuxième mode de réalisation d'ensemble de siège selon l'invention.

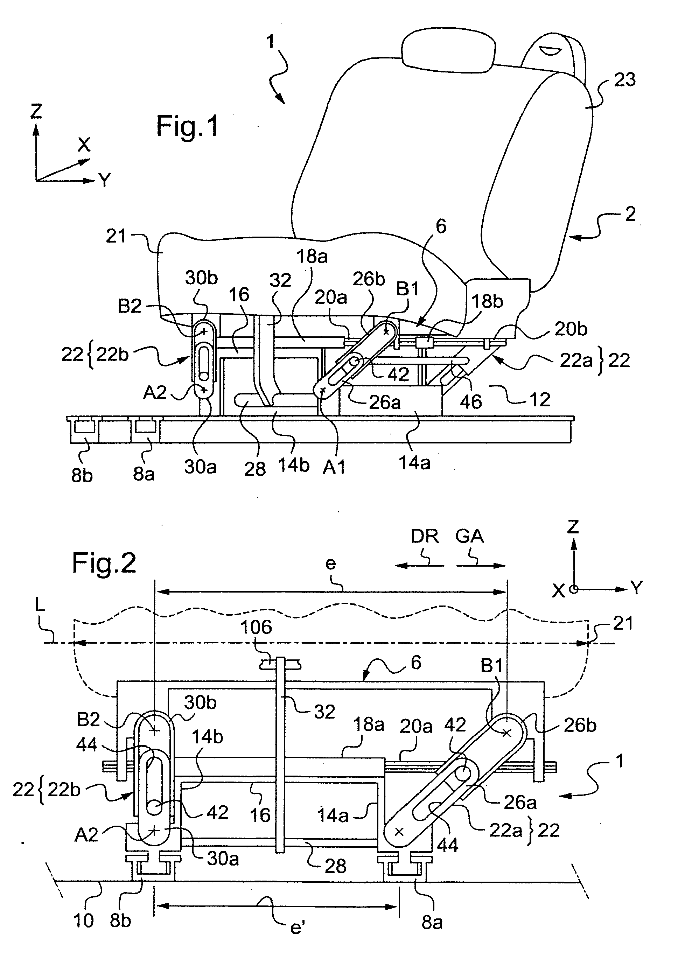

En référence tout d'abord conjointement aux figures 1 et 2, on peut voir un ensemble de siège 1 pour véhicule automobile (non représenté), selon un premier mode de réalisation de la présente invention.

Dans toute la description qui va suivre, par convention, on appelle X la direction longitudinale du véhicule, Y la direction transversale de ce dernier, et Z la direction verticale, ces trois directions étant orthogonales entre-elles.

Comme cela ressortira clairement de la description ci-dessous, l'ensemble de siège 1 est conçu de manière à présenter un siège 2 susceptible d'être déplacé dans les deux directions X et Y à l'intérieur de l'habitacle du véhicule, sans que le occupant ce n'ait de se lever pour changer de position transversale et/ou longitudinale. Le siège 2 comporte une assise 21 et un dossier 23. Sur les figures 1 et 2, le siège 2 est montré dans une position d'extrémité latérale gauche, sa position longitudinale n'ayant que peu d'importance pour la compréhension de l'invention.

Par ailleurs, l'ensemble de siège 1 comprend deux rails de guidage longitudinaux assemblés fixement au châssis 10 du véhicule, ces deux rails longitudinaux étant respectivement appelés rail gauche 8a et rail droit 8b. A cet égard, il est noté que les notions de droite et gauche sont indiquées schématiquement par les flèches DR et GA sur la figure 2. Ces rails 8a, 8b, de conception classique et connue de l'homme du métier, présentent un écartement e' selon la direction Y qui est suffisamment faible pour que ceux-ci puissent s'étendre vers l'arrière au-delà du passage de roue (non représenté).

Une première structure de support de siège 12 coopère avec les deux rails 8a, 8b, de sorte qu'elle est susceptible d'être mise en mouvement selon la direction X le long de ces rails fixes 8a, 8b. Globalement, la première structure 12 comprend deux flancs latéraux 14a, 14b dont une extrémité inférieure est insérée à l'intérieur des rails 8a, 8b, permettant ainsi aux flancs 14a, 14b de coulisser. Afin de renforcer la rigidité de la première structure 12, celle-ci comprend en outre une plaque 16 horizontale joignant les flancs 14a et 14b.

En outre, l'ensemble 1 comprend des moyens de guidage transversaux du siège 2, qui dans ce premier mode de réalisation préféré comprennent au moins une glissière transversale, et de préférence deux glissières transversales 18a, 18b comme cela est visible sur la figure 1. Les glissières 18a et 18b sont solidaires de la plaque 16. En effet, on peut apercevoir que la première structure de support 12 est pourvue au niveau d'une partie avant des flancs latéraux 14a, 14b d'une glissière avant 18a orientée selon la direction Y, ainsi que d'une glissière arrière 18b également orientée selon la direction Y et située au niveau d'une partie arrière des flancs latéraux 14a, 14b, les deux glissières 18a, 18b étant donc décalées l'une de l'autre selon la direction X. Ces glissières transversales 18a, 18b appartenant à la première structure de support 12 coopèrent chacune avec un élément de glissière complémentaire 20a, 20b appartenant à la deuxième structure de support 6. De cette façon, on peut comprendre que cette deuxième structure 6 et le siège 2 lui étant solidarisé sont capables d'être mis en mouvement selon la direction Y à l'intérieur de l'habitacle, par rapport à la première structure 12 munie des glissières transversales 18a, 18b.

L'écartement e' entre les deux rails 8a, 8b étant inférieur à la largeur maximale L du siège 2, un couple 22 de bras latéraux de support 22a, 22b de longueurs variables sont de façon à reprendre des efforts au niveau parties latérales du siège 2 situées en porte-à-faux par rapport aux rails 8a, 8b. Pour ce faire, il est de préférence prévu deux couples 22 respectivement situés à l'arrière et à l'avant des première et structures 12 et 6, ces deux couples 22 disposant d'une conception identique et étant agencés parallèlement dans la direction X. Ainsi, seuls la conception et le fonctionnement du couple avant 22 seront présentés ci-après.

Toujours en référence conjointement aux figures 1 et 2, on peut voir que le couple 22 comporte un bras latéral de support gauche 22a destiné à la reprise d'efforts au niveau d'une partie d'extrémité latérale gauche du siège 2 en porte-à-faux par rapport aux rails 8a, 8b, ainsi qu'un bras latéral de support droit 22b destiné à la reprise d'efforts au niveau d'une partie d'extrémité latérale droite de ce siège en porte-à-faux par rapport à ces mêmes rails.

Le bras gauche 22a comporte deux parties susceptibles de coulisser l'une par rapport à l'autre, de sorte que sa conception peut être qualifiée de télescopique. La partie inférieure 26a dispose d'une extrémité inférieure montée de façon articulée sur la première structure 12, et plus précisément sur un chant du flanc latéral gauche 14a, en un point d'attache inférieur A1 et selon un axe parallèle à la direction X. Cette partie inférieure 26a est introduite dans une partie supérieure 26b disposant d'une extrémité supérieure montée de façon articulée sur la deuxième structure 6, et plus précisément sur une partie d'extrémité latérale gauche de cette deuxième structure, en un point d'attache supérieur B1 et selon un axe parallèle à la direction X. La partie supérieure 26b présente un rebord circonférentiel définissant deux pistes de coulissement planes, parallèles et en regard. Elles sont respectivement en contact plan avec deux chants plans longitudinaux et opposés de la partie inférieure 26a. De plus, la partie supérieure 26b est solidaire d'un pion 42 permettant d'offrir une butée inférieure ainsi qu'une butée supérieure pour la partie inférieure 26a en coulissement, dans la mesure où ce pion 42 est inséré dans une lumière 44 pratiquée longitudinalement dans cette partie inférieure 26a, et de largeur sensiblement égale au diamètre du pion 42. Le pion 42 peut en fait constituer l'extrémité avant d'une barre longitudinale 46 dont l'extrémité arrière constitue quant à elle un pion similaire pour le bras arrière gauche 22a du couple arrière 22.

Le bras droit 22b est de conception identique à du bras gauche 22a, de sorte qu'il de deux parties 30a, 30b susceptibles de coulisser l'une par rapport à l'autre. La partie inférieure 30a dispose d'une extrémité inférieure montée de façon articulée sur la première structure 12, et plus précisément sur un chant du flanc latéral droit 14b, en un point d'attache inférieur A2 et selon un axe parallèle à la direction X. La partie supérieure 30b dispose quant à elle d'une extrémité supérieure montée de façon articulée sur la deuxième structure 6, et plus précisément sur une partie d'extrémité latérale droite de cette deuxième structure, en un point d'attache supérieur B2 et selon un axe parallèle à la direction X. L'écartement e selon la direction Y entre les points d'attache supérieurs B1 et B2 est supérieur à l'écartement e' entre les deux rails 8a, 8b, bien entendu de manière à supprimer/limiter les parties en porte-à-faux au niveau du siège 2.

Sur la figure 2 montrant le siège 2 dans une position d'extrémité latérale gauche, le bras gauche 22a est allongé au maximum comme l'indique la butée supérieure du pion 42 dans la lumière 44, et dispose d'une position inclinée l'éloignant du centre du siège en s'étendant vers le haut. Parallèlement, le bras droit 22b est totalement rétracté comme l'indique la butée inférieure du pion 42 dans la lumière 44, et présente une position sensiblement verticale interceptant fictivement le rail droit 8b.

Lorsque le passager désire déplacer le siège 2 vers la droite selon la direction Y, ce déplacement réalisé grâce aux moyens de guidage transversaux est accompagné automatiquement par un allongement et un rétrécissement progressifs et simultanés des bras droit et gauche 22b, 22a, respectivement.

Ce déplacement peut être opéré jusqu'à ce que le siège 2 atteigne une position d'extrémité latérale droite, dans laquelle le bras gauche 22a totalement rétracté présente une position sensiblement verticale interceptant fictivement le rail gauche 8a, et dans laquelle le bras droit 22b allongé au maximum dispose d'une position inclinée l'éloignant du centre du siège en s'étendant vers le haut. Durant un tel déplacement, le pion 42 de chacun des deux bras 22a, 22b coulisse automatiquement à l'intérieur de sa lumière 44 associée. En outre, chaque bras 22a, 22b d'un même couple 22 décrit un mouvement dans un même plan vertical parallèle à la direction Y. Naturellement, chaque bras latéral 22a, 22b aurait pu être conçu d'une manière différente de celle exposée ci-dessus, mais toujours de façon télescopique , c'est-à- dire de manière à pouvoir s'allonger / se rétrécir automatiquement lors d'un déplacement transversal de la première structure 6, afin d'accompagner le siège 2 dans ce même mouvement transversal et de lui apporter un support supplémentaire évitant la présence de parties en porte-à-faux.

Le dossier 23 est solidaire de la seconde structure 6 selon un axe Y. De façon connue en soi, le dossier 23 est monté pivotant autour d'un axe Y par rapport à la deuxième structure 6. Un mécanisme permettant de verrouiller le pivotement du dossier 23 par rapport à la deuxième structure 6 est connu en soi de l'homme du métier et ne sera pas détaillé.

L'assise 21 peut sélectivement être solidarisée à la deuxième structure 6, ou être montée pivotante autour d'un axe Y et coulissante selon cet axe par rapport à cette deuxième structure 6. L'homme du métier pourra déterminer un mécanisme de verrouillage adéquat de l'assise 21 à la deuxième structure 6. Le pivotement de l'assise 21 permet de la disposer sensiblement parallèle avec le dossier 23, voire en contact avec le dossier 23. Dans position, la course du siège 2 vers l'avant peut être rallongée avant que le siège 2 ne heurte un autre objet. L'espace dégagé à l'arrière du dossier 23 est ainsi accru, ce qui facilite notamment l'accès à une rangée de siège placée derrière.

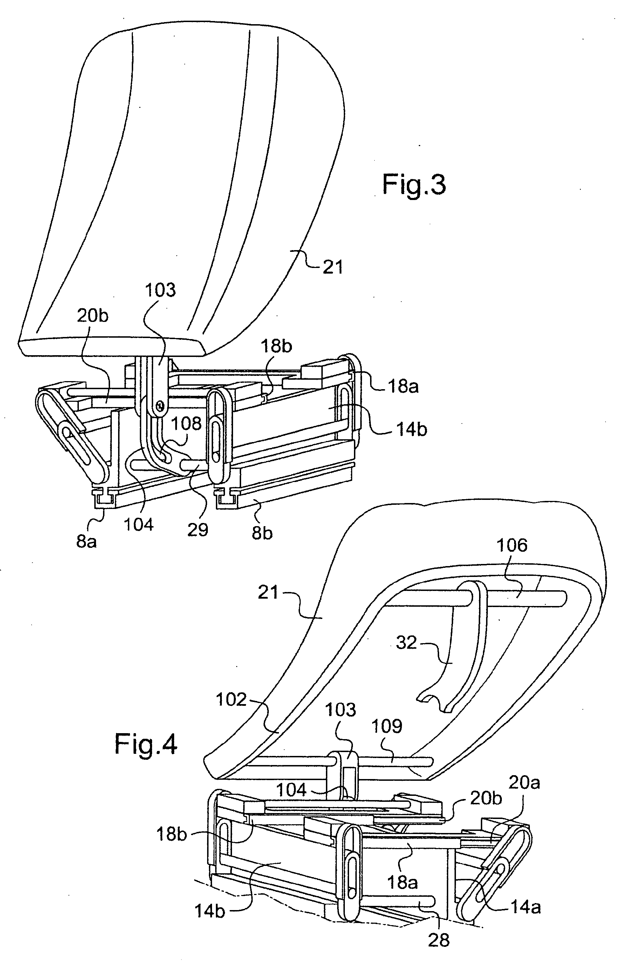

Comme cela ressort plus précisément des figures 3 et 4, des arbres transversaux 28 et 29 joignent les flancs latéraux 14a et 14b respectivement par leurs parties et arrière. Une biellette 104 est montée coulissante sur l'arbre transversal 29. La biellette 104 présente une lumière 108 formant une piste de guidage. Une biellette 105 est munie d'un arbre traversant la lumière 108. Cet arbre est guidé par la piste formée par la lumière 108 et peut pivoter autour d'un axe Y dans cette lumière. Ainsi, l'assise 21 peut à la fois pivoter autour d'un axe Y et être globalement relevée durant son pivotement.

L'assise 21 comprend un châssis 102. Le châssis d'assise 1 02 présente des arbres 106 et 109 reliant des flancs du châssis d'assise 102 respectivement par leurs parties avant et arrière. La biellette 103 est montée à rotation autour d'un axe de direction Y sur l'arbre arrière 109. Une biellette 32 forme avec l'arbre 106 un organe de liaison de la partie avant de l'assise 21 à la première structure 12. La biellette 32 est montée pivotante autour d'un axe de direction Y par rapport à l'arbre 106. La biellette 32 présente une extrémité pouvant coulisser sur l'arbre transversal 28, et pouvant être écartée de cet arbre 28. La biellette 32 est sollicitée par un organe de rappel non illustré de sorte que cette extrémité vienne en contact avec l'assise lorsque celle-ci est déverrouillée. La biellette 32 ne gêne alors pas la manipulation de l'assise 31 ou ne risque pas de blesser un utilisateur. Lorsque l'extrémité de la biellette 32 est montée coulissante sur l'arbre 28, l'arbre 28 reprend des efforts axiaux transmis par l'assise 21. Ainsi, la résistance mécanique de l'ensemble de siège n'est pas amoindrie par la cinématique de l'assise 21. Un mécanisme de rappel non illustre peut rappeler l'assise 21 vers une position de contact avec le dossier 23 lorsque 21 est désolidarisée de la deuxième structure 6.

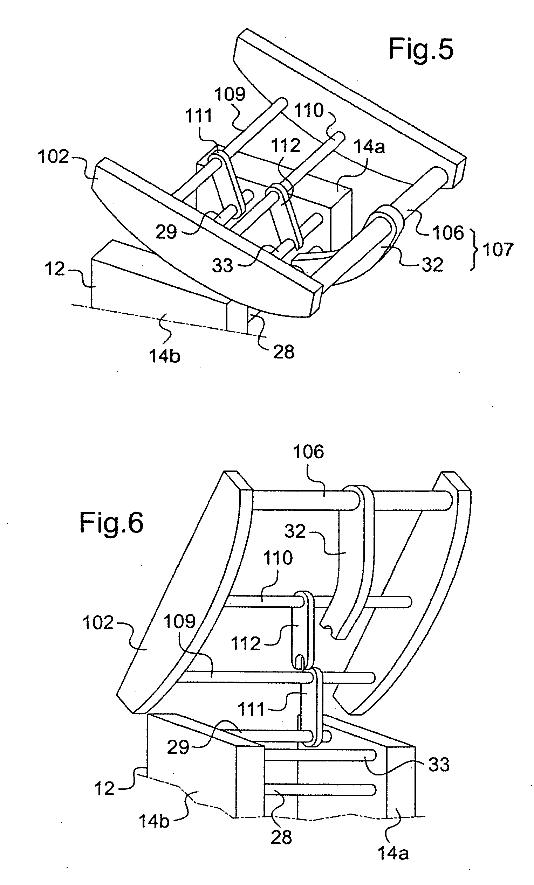

Les figures 5 et 6 représentent des détails d'un deuxième mode de réalisation de l'ensemble de siège durant différentes étapes de sa manipulation. L'ensemble de siège 1 comprend également une assise munie d'un châssis d'assise 102. Le châssis d'assise présente deux flancs (sensiblement parallèles au plan X,Z) reliés par des arbres transversaux 106, 110 et 109. Les arbres transversaux 106, 110 et 109 relient respectivement des parties avant, des parties médianes et des parties arrière des flancs. Des biellettes 32, 112 et 111 sont montées pivotantes autour d'axes Y respectivement sur les arbres 106, 110 et 109. L'ensemble de siège selon ce mode de réalisation comprend également une deuxième structure non illustrée afin de faciliter la lisibilité des figures. Cette deuxième structure comprend dans sa partie arrière un élément coulissant selon la direction Y par rapport à un rail de guidage (non illustré) solidaire de la partie de la première structure 12. Afin de dégager la partie avant de l'ensemble de siège, les première et deuxième structures sont dépourvues respectivement de rail de guidage et d'élément coulissant au niveau de leur partie avant.

Comme ressort plus précisément des figures 5 et 6, des arbres transversaux 28, 33 et 29 joignent les flancs latéraux 14a et 14b respectivement par leurs parties avant, médiane et arrière.

La biellette 32 présente une extrémité pouvant coulisser sur l'arbre transversal 28, et pouvant être écartée de cet arbre 28. La biellette 32 est sollicitée par un organe de rappel non illustré de sorte que cette extrémité vienne en contact avec une surface inférieure de l'assise lorsque celle-ci est déverrouillée. De façon similaire, la biellette 112 présente une extrémité pouvant coulisser sur l'arbre transversal 33 et pouvant être écartée de cet arbre 33. La biellette 112 peut également être sollicitée par un organe de rappel de sorte que cette extrémité vienne en contact avec une surface inférieure de l'assise lorsque celle-ci est désolidarisée de la deuxième structure 6. La biellette 111 est montée coulissante sur l'arbre 29 et est montée pivotante par rapport à cet arbre 29 autour d'un axe de direction Y.

Lorsque l'assise est solidarisée à la première structure 12, l'extrémité de la biellette 32 est montée coulissante sur l'arbre 28 et l'extrémité de la biellette 112 est montée coulissante sur l'arbre 33. Les arbres 28 et 33 reprennent alors des efforts axiaux transmis par l'assise. Ainsi, la résistance mécanique de l'ensemble de siège n'est pas amoindrie par la cinématique de l'assise.

Les figures 5 et 6 illustrent deux positions distinctes d'un ensemble du châssis 102 par rapport à la structure 12, après la désolidarisation entre le châssis 1023 et la deuxième structure 6. La figure 5 illustre le début d'un mouvement de désolidarisation. L'assise étant tirée vers l'avant, les biellettes 111 et 112 définissent un pivotement du châssis 102 autour d'un axe transversal. La partie arrière du châssis 102 est relevée et le châssis 102 est légèrement incliné vers l'avant. Durant ce mouvement, l'extrémité de la biellette 32 est de l'arbre 28. La figure 6 illustre la poursuite d'un mouvement de désolidarisation. Le châssis 102 pivote autour de l'arbre 29, de sorte que sa avant est relevée. La biellette 112 est alors désolidarisée de l'arbre 33. Dans position, la surface supérieure de vient en contact avec le dossier. La course de l'ensemble de siège vers l'avant peut alors être accrue, ce qui facilite l'accès à une rangée de siège se trouvant derrière.

L'homme du métier pourra envisager un ensemble de siège 1 équipé de commandes manuelles ou électriques classiques pour piloter les déplacements transversaux et longitudinaux du siège 2.

Bien entendu, diverses modifications, si elles restent dans le cadre de l'invention telle que définie par les revendications, peuvent être apportées par l'homme du métier aux ensembles de siège 1 pour véhicule automobile qui viennent d'être décrits, uniquement à titre d'exemples non limitatifs.

## Revendications

1. Ensemble de siège (1) pour véhicule automobile, comprenant :
- une première structure de support de siège (12) présentant :
- des flancs latéraux (14a, 14b) aptes à être montés coulissants dans des rails longitudinaux ;
- des premier et deuxième arbres transversaux (28, 29) joignant les deux flancs latéraux (14a, 14b), disposés respectivement à l'avant et à l'arrière des flancs latéraux;
- une deuxième structure de support de siège (6), montée coulissante transversalement par rapport à la première structure (12) ;
- une assise de siège (21) comprenant :
- un châssis d'assise (102) ;
- un mécanisme solidarisant sélectivement le châssis à la deuxième structure de support de siège (6) ;
- un premier organe de liaison (103, 104), solidaire d'une partie arrière du châssis d'assise (102), guidant le châssis d'assise en translation le long de l'axe du premier arbre transversal (29), et en rotation autour de l'axe du premier arbre transversal (29) lorsque le mécanisme désolidarise le châssis et la deuxième structure de siège ;
- un deuxième organe de liaison (107), solidaire d'une partie avant du châssis d'assise (102),
ledit ensemble de siège étant **caractérisé en ce que** ledit deuxième organe de liaison est
adapté à guider le châssis d'assise en translation le long de l'axe du deuxième arbre transversal (28) lorsque le mécanisme solidarise le châssis à la deuxième structure de siège, ledit deuxième organe de liaison étant apte à être sélectivement désolidarisé du deuxième arbre transversal (28).

2. Ensemble de siège selon la revendication 1, dans lequel le châssis d'assise (102) comprend une barre transversale (106) au niveau de sa partie avant, dans lequel le deuxième organe de liaison comprend une biellette (32) dont une extrémité est montée à rotation sur cette barre transversale (106) et dont une deuxième extrémité comprend des moyens pour guider la biellette en translation selon l'axe du deuxième arbre transversal (28) et pouvant être sélectivement désaccouplés du deuxième arbre transversal.

3. Ensemble de siège selon la revendication 2, comprenant un dispositif de rappel sollicitant la biellette (32) vers une position repliée sensiblement parallèle à l'assise (21) lorsque les moyens de guidage sont désaccouplés du deuxième arbre transversal (28).

4. Ensemble de siège selon l'une quelconque des revendications précédentes, dans lequel la deuxième structure de support de siège (6) est montée coulissante transversalement par rapport à la première structure (12) par l'intermédiaire d'au moins deux bras latéraux de support (22a, 22b) télescopiques dont les extrémités inférieure et supérieure sont montées pivotantes par rapport respectivement à la première (12) et à la deuxième (6) structures.

5. Ensemble de siège selon l'une quelconque des revendications précédentes, comprenant un dossier (23) s'étendant sensiblement verticalement, dans lequel l'assise (21) est mobile entre une position rabattue contre le dossier (23) et une position sensiblement horizontale lorsque le mécanisme de solidarisation désolidarise le châssis de siège (102) et la deuxième structure (6) de support de siège.

6. Ensemble de siège selon l'une quelconque des revendications précédentes, dans lequel le premier organe de liaison (103) comprend une première partie montée à rotation sur le châssis d'assise (102), une deuxième partie montée à rotation et coulissante sur le premier arbre transversal (29), une des deux parties présentant une piste de guidage (108), l'autre des deux parties présentant un arbre monté coulissant dans ladite piste (108).

7. Ensemble de siège selon l'une quelconque des revendications précédentes, la première structure de siège (12) comprenant dans sa partie supérieure deux rails transversaux (18a, 18b), la deuxième structure de support de siège (6) comprenant deux profilés transversaux (20a, 20b) montés coulissants respectivement dans les deux rails transversaux.

8. Ensemble de siège selon l'une quelconque des revendications 1 à 5,
comprenant :
- un troisième arbre transversal (33) joignant les deux flancs latéraux (14a, 14b),
- un troisième organe de liaison (112), solidaire d'une partie intermédiaire du châssis d'assise (102), guidant le châssis d'assise en translation le long de l'axe du troisième arbre transversal (33), et guidant le châssis d'assise en rotation autour de l'axe du troisième arbre transversal (33) lorsque le mécanisme désolidarise le châssis (102) et la deuxième structure de siège (6), ledit troisième organe de liaison étant apte à être sélectivement désolidarisé du troisième arbre transversal,
et dans lequel lesdits arbres transversaux et lesdits organes de liaison sont configurés de sorte qu'une rotation du châssis d'assise l'amenant à avancer conduit à la désolidarisation entre le deuxième organe de liaison et le deuxième arbre transversal (28).

9. Ensemble de siège selon la revendication 8, dans lequel la première structure de siège (12) comprend dans sa partie supérieure un rail transversal, la deuxième structure de support de siège comprenant un profilé transversal monté coulissant dans ledit rail transversal.

## Claims

1. Seat assembly (1) for a motor vehicle, comprising:
- a first seat support structure (12) having:
- two lateral side walls (14a, 14) able to be mounted so as to slide in longitudinal rails; and
- first and second transverse shafts (28, 29) connecting the two lateral side walls (14a, 14b) and located respectively at the front and at the rear of the lateral side walls;
- a second seat support structure (6) mounted so as to slide transversely with respect to the first structure (12); and
- a seat squab (21) comprising:
- a squab frame (102);
- a mechanism securing the frame selectively to the second seat support structure (6);
- a first linking member (103, 104) secured to a rear part of the squab frame (102) and guiding the squab frame in translation along the axis of the first transverse shaft (29) and in rotation about the axis of the first transverse shaft (29) when the mechanism disconnects the frame and the second seat structure; and
- a second linking member (107) secured to a front part of the squab frame (102),
said seat assembly being **characterized in that** said second linking member is suitable for guiding the squab frame in translation along the axis of the second transverse shaft (28) when the mechanism secures the frame to the second seat structure, said second linking member being able to be disconnected selectively from the second transverse shaft (28).

2. Seat assembly according to Claim 1, in which the squab frame (102) comprises a transverse bar (106) in its front part, and in which the second linking member comprises a tie rod (32) one end of which is mounted rotatably on this transverse bar (106) and a second end of which comprises means for guiding the tie rod in translation along the axis of the second transverse shaft (28) and which can be uncoupled selectively from the second transverse shaft.

3. Seat assembly according to Claim 2, comprising a return means stressing the tie rod (32) into a folded position approximately parallel to the squab (21) when the guide means are uncoupled from the second transverse shaft (28).

4. Seat assembly according to any one of the preceding claims, in which the second seat support structure (6) is mounted so as to slide transversely with respect to the first structure (12) by way of at least two telescopic side support arms (22a, 22b) the lower and upper ends of which are counted so as to pivot with respect to the first structure (12) and the second structure (6).

5. Seat assembly according to any one of the preceding claims, comprising a backrest (23) extending approximately vertically, in which the squab (21) is able to move between a position folded up against the backrest (23) and an approximately horizontal position when the securing mechanism disconnects the seat frame (102) and the second seat support structure (6).

6. Seat assembly according to any one of the preceding claims, in which the first linking member (103) comprises a first part Mounted rotatably on the squab frame (102), and a second part mounted rotatably and so as to slide on the first transverse shaft (29), one of the two parts having a guide track (108) and the other of the two parts having a shaft mounted so as to slide in said track (108).

7. Seat assembly according to any one of the preceding claims, the upper part of the first seat structure (12) comprising two transverse rails (18a, 18b) and the second seat support structure (6) comprising two transverse profiles (20a, 20b) mounted so as to slide respectively in the two transverse rails.

8. Seat assembly according to any one of Claims 1 to 5, comprising:
- a third transverse shaft (33) connecting the two lateral side walls (14a, 14b), and
- a third linking member (112) secured to an intermediate part of the squab frame (102), guiding the squab frame in translation along the axis of the third transverse shaft (33) and guiding the squab frame in rotation the axis of the third transverse shaft (33) when the mechanism disconnects the frame (102) and the second seat structure (6), said third linking member being able to be disconnected selectively froM the third transverse shaft,
and in which said transverse shafts and said linking members are designed such that a rotation of the squab frame moving it forwards leads to the second linking member and the second transverse shaft (28) being disconnected.

9. Seat assembly according tao Claim 8, in which the upper part of the first seat structure (12) comprises a transverse rail, with the second seat support structure comprising a transverse profile mounted so as to slide in said transverse rail.

## Patentansprüche

1. Sitzanordnung (1) für ein Kraftfahrzeug mit Folgendem:
- einer ersten Sitzstützstruktur (12), die
- Seitenflanken (14a, 14b), die geeignet sind, in Längsschienen verschiebbar montiert zu werden, und
- einen ersten und einen zweiten Querzapfen (28, 29) aufweist, die die beiden Seitenflanken (14a, 14b) verbinden und vorne bzw. hinten an den Seitenflanken angeordnet sind,
- einer zweiten Sitzstützstruktur (6), die bezüglich der ersten Struktur (12) querverschiebbar montiert ist, und
- einer Sitzfläche (21) mit Folgendem:
- einem Sitzflächengestell (102),
- einem Mechanismus, der das Gestell gezielt und fest mit der zweiten Sitzstützstruktur (6) verbindet,
- einem ersten Verbindungselement (103, 104), das fest mit einem hinteren Teil des Sitzflächengestells (102) verbunden ist, das Sitzflächengestell translatorisch entlang der Achse des ersten Querzapfens (29) führt und sich um die Achse des ersten Querzapfens (29) dreht, wenn der Mechanismus das Gestell und die zweite Sitzstruktur voneinander trennt, und
- einem zweiten Verbindungselement (107), das fest mit einem vorderen Teil des Sitzflächengestelles (102) verbunden ist,
**dadurch gekennzeichnet, dass** das zweite Verbindungselement dazu ausgelegt ist, das Sitzflächengestell translatorisch entlang der Achse des zweiten Querzapfens (28) zu führen, wenn der Mechanismus das Gestell fest mit der zweiten Sitzstruktur verbindet, wobei das zweite Verbindungselement geeignet ist, gezielt von dem zweiten Querzapfen (28) getrennt zu werden.

2. Sitzanordnung nach Anspruch 1, wobei das Sitzflächengestell (102) an seinem vorderen Teil eine Querstange (106) umfasst und wobei das zweite Verbindungselement einen Arm (32) umfasst, dessen eines Ende drehbar an dieser Querstange (106) montiere ist und dessen zweites Ende Mitte zum translatorischen Führen des Arms entlang der Achse des zweiten Querzapfens (28) umfasst, die gezielt vom zweiten Querzapfen abgekuppelt werden können.

3. Sitzanordnung nach Anspruch 2, mit einer Rückholvorrichtung, die den Arm (32) zu einer umgeklappten, im Wesentlichen parallel zur Sitzfläche (21) verlaufenden Postition hin beaufschlagt, wenn die Führungsmittel vom zweiten Querzapfen (28) abgekuppelt sind.

4. Sitzanordnung nach einem der vorhergehenden Ansprüche, wobei die zweite Sitzstützstruktur (6) mittels mindestens zweier teleskopischer Seitenstützarme (22a, 22b) bezüglich der ersten Struktur (12) quer verschiebbar montiert ist, wobei die unteren und oberen Enden der Seitenstützarme (22a, 22b) bezüglich der ersten (12) bzw. der zweiten (6) Struktur schwenkend montiert sind.

5. Sitzanordnung nach einem der vorhergehenden Ansprüche, mit einer Rückenlehne (23), die sich im Wesentlichen vertikal erstreckt, wobei die Sitzfläche (21) zwischen einer gegen die Rückenlehne (23) hochgeklappten Postition und einer im Wesentlichen horizontalen Postition beweglich ist, wenn der Verbindungsmechanismus das Sitzgestell (102) von der zweiten Sitzstützstruktur (6) trennt.

6. Sitzanordnung nach einem der vorhergehenden Ansprüche, wobei das erste Verbindungselement (103) einen ersten drehbar am Sitzflächengestell (102) montierten Teil und einen zweiten drehbar und verschiebbar am ersten Querzapfen (29) montierten Teil umfasst, wobei einer der beiden Teile eine Führungsbahn (108) und der andere der beiden Teile einen in der Bahn (108) verschiebbar montierten Zapfen darstellt.

7. Sitzanordnung nach einem der vorhergehenden Ansprüche, wobei die erste Sitzstruktur (12) an ihrem oberen Teil zwei Querschieben (18a, 18b) umfasst und die zweite Sitzstützstruktur (6) zwei Querprofile (20a, 20b) umfasst, die jeweils verschiebbar in den beiden Querschienen montiert sind.

8. Sitzanordnung nach einem der Ansprüche 1 bis 5, mit
- einem dritten Querzapfen (33), der die beiden Seitenflanken (14a, 14b) verbindet, und
- einem dritten Verbindungselement (112), das fest mit einem Zwischenteil des Sitzflächengestells (102) verbunden ist, das Sitzflächengestell translatorisch entlang der Achse des dritten Querzapfens (33) führt und das Sitzflächengestell zum die Achse des dritten Querzapfens (33) drehend führt, wenn der Mechanismus das Gestell (102) und die zweite Sitzstruktur (6) voneinander trennt, wobei das dritte Verbindungselement geeignet ist, gezielt vom dritten Querzapfen getrennt zu werden,
und wobei die Querzapfen und die Verbindungselemente so konfiguriert sind, dass eine Drehung des Sitzflächengestells, wodurch es zum Vorschub veranlasst wird, zu der Trennung des zweiten Verbindungselements von dem zweiten Querzapfen (28) führt.

9. Sitzanordnung nach Anspruch 8, wobei die erste Sitzstruktur (12) an ihrem oberen Teil eine Querschiene umfasst, wobei die zweite Sitzstützstruktur ein Querprofil umfasst, das verschiebbar in der Querschiene montiert ist.
